# DEMANDE DE BREVET EUROPEEN

(11) **EP 3 756 519 A1**
(43) Date de publication de la demande: **30.12.2020**
(21) Numéro de dépôt: 20315296.2
(22) Date de dépôt: 05.06.2020
(51) Int. Cl.: A47J 43/26

(54) **DISPOSITIF POUR CASSER LES COQUES DES FRUITS À COQUE**

(30) Priorité: 25.06.2019 FR 1906919
(71) Demandeur: Jacquelot, Bertrand, 77000 Vaux le Penil (FR)
(72) Inventeur: Jacquelot, Bertrand, 77000 Vaux le Penil (FR)
(74) Mandataire: Flavenot, Bernard

(57) **Abrégé**

La présente invention concerne les dispositifs pour casser les coques des fruits à coque Fc.

Le dispositif selon l'invention comporte essentiellement un manchon 10 avec une percée traversante 11 selon un axe 12 ; des moyens élastiques de préhension 20 aptes à exercer une force selon une direction préférentielle couplés avec l'extrémité 13 du manchon de façon que la direction préférentielle soit sensiblement confondue avec l'axe 12 ; une embase 30 ; et des moyens 40 pour monter le manchon 10 en rotation par rapport à l'embase 30 autour d'un axe 41 perpendiculaire à l'axe 12, de façon que le manchon 10 soit apte à prendre une première position P1 dans laquelle le plan de la seconde extrémité 14 du manchon repose sensiblement sur la face 32 de l'embase 30 et une seconde position P2 dans laquelle le plan de l'extrémité 14 du manchon 10 fait, avec le plan de la face 32 de l'embase 30, un angle non nul.

Application à la casse des coques des fruits à coque comme les noix, les noix de pécan, les noix de cajou, les amandes, les noix de macadamia, les noisettes.

## Description

### Domaine technique

La présente invention concerne les dispositifs pour casser les coques des fruits à coque comme les noix, les noix de pécan, les pistaches, les noix de cajou, les amandes, les noix de macadamia, les noisettes, etc..

On connaît déjà un dispositif pour casser les coques des fruits à coque. Ce dispositif est constitué essentiellement de deux pièces indépendantes mais qui, pour permettre au dispositif de fonctionner correctement, doivent coopérer par un assemblage qui se fait manuellement. Ces deux pièces sont : une première pièce constituée d'un manchon dont une première extrémité est obturée par une capote élastique, et une seconde pièce constituée par une embase dont les dimensions sont adaptées pour obturer la seconde extrémité du manchon.

Ce dispositif selon l'art antérieur fonctionne de la façon suivante. Si par exemple un utilisateur veut casser la coque d'une noisette, il positionne tout d'abord le manchon de façon que sa seconde extrémité soit, dans un milieu où règne une force de gravitation, à un niveau supérieur à sa première extrémité, puis introduit la noisette dans le manchon par sa seconde extrémité. De cette façon, la noisette tombe dans le fond de la capote.

Avec par exemple deux doigts, il saisit la noisette en la pinçant avec le fond de la capote, puis exerce sur cette capote une force de traction pour l'allonger et donc la bander élastiquement à la manière d'un ressort.

Après avoir effectué ces manipulations, tout en maintenant la capote bandée et la noisette saisie, il assemble les deux pièces de façon que la seconde extrémité du manchon soit obturée par l'embase. Les deux pièces étant ainsi assemblées, il lâche la capote qui, à la manière d'un lance pierre ou d'une fronde, projette violemment la noisette sur l'embase, ce qui a pour effet de briser la coque de la noisette. L'utilisateur peut alors désassembler les deux pièces. La face de l'embase qui était tournée vers l'intérieur du manchon joue le rôle d'un plateau présentoir du fruit de la noisette délivré de sa coque éclatée. L'utilisateur peut alors prélever le fruit de la noisette pour le déguster, et se débarrasser de la coque brisée.

Un tel dispositif selon l'art antérieur est par exemple décrit dans de nombreux documents, par exemple la publicité de Mr Adrien Roussel « le casse-noisette TOHA » qui est visible sur le Net, le EP 328585, le US 4009951 et le FR 2896979.

Un dispositif selon cet art antérieur donne entière satisfaction pour atteindre le but pour lequel il est réalisé. Il peut cependant présenter un inconvénient majeur sur le plan de la sécurité. En effet, un individu maladroit ou malveillant peut utiliser la première pièce seule comme décrit ci-dessus, sans l'associer à l'embase, exactement comme un lance pierre avec une possibilité de casser des objets de l'environnement et/ou de blesser des tiers qui se trouveraient à proximité.

### But de la présente invention

La présente invention a donc pour but de réaliser un dispositif selon une réalisation simple et peu onéreuse pour casser les coques des fruits à coque, qui pallie l'inconvénient majeur, mentionné ci-avant, du dispositif antérieur décrit ci-dessus.

### Définition de l'invention

Plus précisément, la présente invention a pour objet un dispositif pour casser les coques des fruits à coque, tel que défini dans la revendication 1 annexée.

### Brève Description des dessins

D'autres caractéristiques et avantages de la présente invention apparaîtront au cours de la description suivante donnée en regard du dessin annexé à titre illustratif, mais nullement limitatif, dans lequel :

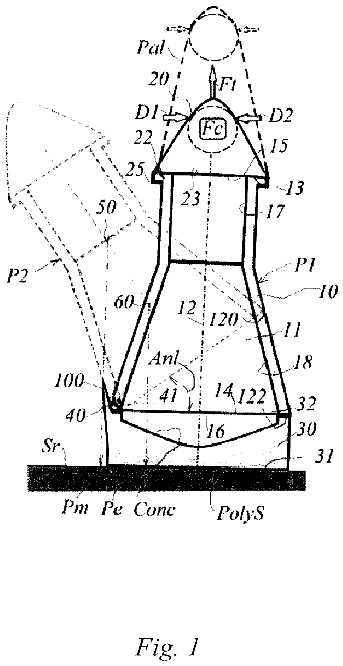

La figure 1 représente, vu en coupe longitudinale, un mode de réalisation du dispositif selon l'invention pour casser les coques des fruits à coque, dans deux configurations possibles de ce dispositif lors de son utilisation, et

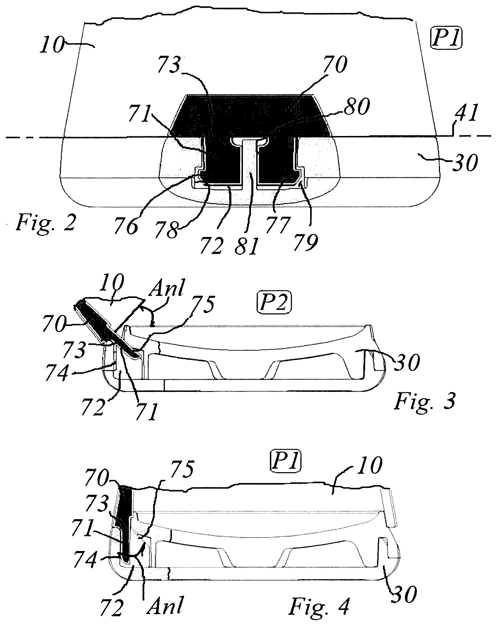

Les figures 2 à 4 représentent un autre mode de réalisation très avantageux d'une partie du dispositif illustré en entier sur la figure 1, cette partie étant relative aux moyens de rotation, entre eux, des éléments respectivement référencés 10 et 30 sur cette figure 1, la figure 2 étant une vue de côté de cette partie, les figures 3 et 4 représentant respectivement deux coupes axiales de cette partie dans deux configurations possibles du dispositif.

Il est précisé que, dans la présente description, si l'adverbe "sensiblement" est associé à un qualificatif d'un moyen donné, ce qualificatif doit être compris au sens strict ou approché.

### Description d'un mode de réalisation préféré de l'objet de l'invention.

La présente invention concerne un dispositif pour casser les coques des fruits à coque Fc, par exemple les noix, noix de pécan, pistaches, noix de cajou, amandes, noix de macadamia, noisettes, etc.. A titre d'exemple pour la présente description, la noisette a été choisie comme fruit à coque Fc, mais l'utilisation du dispositif selon l'invention n'est pas limitée à ce type de fruit à coque.

En référence à la figure 1, le dispositif comporte un manchon 10 comportant une percée traversante 11 définie selon un axe central longitudinal 12, la percée traversante débouchant sur les première et seconde extrémités 13, 14, sensiblement avantageusement planes, du manchon, respectivement par un premier orifice 15 et un second orifice 16.

Le dispositif comporte en outre des moyens élastiques de préhension 20 aptes à exercer une force selon une direction préférentielle, au moyen d'une commande par exemple manuelle, et des moyens 22 pour coupler ces moyens élastiques de préhension 20 avec la première extrémité 13 du manchon de façon que cette direction préférentielle soit sensiblement confondue avec l'axe central longitudinal 12. Un exemple de réalisation préférentiel de ces moyens élastiques de préhension 20 et de ces moyens de couplage 22 sera donné ci-après.

Le dispositif comporte aussi une embase 30 comprenant deux faces opposées, une première face 31 apte à reposer sur une surface de référence Sr et une seconde face 32 sur laquelle est apte à reposer la seconde extrémité 14 du manchon 10, la seconde face 32 ayant une forme hors-tout déterminée de façon que la seconde extrémité 14 du manchon 10 puisse reposer sur elle, de préférence totalement comme illustré en traits continus sur la figure unique.

Selon une caractéristique essentielle de l'invention, le dispositif comporte en outre des moyens 40 pour monter le manchon 10 en rotation par rapport à l'embase 30 autour d'un axe 41, à proximité de l'embase 30 et en étant sensiblement perpendiculaire à l'axe central longitudinal 12, de façon que le manchon 10 soit apte à prendre toutes positions entre une première position extrême P1 (en traits continus) dans laquelle le plan de la seconde extrémité 14 du manchon repose sur la seconde face 32 de l'embase 30, et une seconde position extrême P2 (en traits interrompus) dans laquelle le plan de cette seconde extrémité 14 du manchon 10 fait, avec le plan de la seconde face 32 de l'embase 30, un angle non nul.

Selon une caractéristique très avantageuse de l'invention, les moyens 40 pour monter le manchon 10 en rotation par rapport à l'embase 30 autour de l'axe de rotation 41 sont agencés de façon que, lorsque le manchon 10 est dans sa seconde position extrême P2, le plan de sa seconde extrémité 14 fait, avec le plan de la seconde face 32 de l'embase 30, un angle dit « angle limite » Anl.

La valeur de cet angle limite Anl est telle que, dans toutes les positions du manchon 10 entre ses deux positions extrêmes P1, P2, l'axe central longitudinal 12 coupe (ou intercepte) toujours la seconde face 32 de l'embase.

L'angle limite précité est en outre déterminé par l'homme du métier, tout en respectant la condition ci-dessus, en fonction des dimensions des fruits à coque à briser.

Selon une autre caractéristique très avantageuse de l'invention lorsque le dispositif est apte à être utilisé dans un milieu où règne une force de gravitation, la surface de référence Sr étant alors une surface horizontale et la première face 31 de l'embase 30 constituant dans ce cas le polygone de sustentation PolyS du dispositif dans une position normale, comme celle illustrée sur la figure 1, la masse du manchon 10 est déterminée de façon que, quand le manchon est dans sa seconde position extrême P2, la projection orthogonale Pm de son centre de gravité 50 sur la surface de référence Sr soit située en dehors du polygone de sustentation PolyS.

Cette caractéristique structurelle est avantageuse car, lorsque le dispositif repose sur une surface horizontale et que le manchon se trouve dans la seconde position extrême P2, elle permet au manchon d'être stable par rapport à l'embase 30 et de ne pas repasser automatiquement à sa première position extrême P1 sous l'influence par exemple de cette force de gravitation.

En outre, pour que le dispositif soit stable lorsque le manchon 10 est dans sa seconde position extrême P2 et que l'embase repose sur une surface horizontale, la masse totale de l'ensemble au moins « manchon-embase 10-30 » (avec éventuellement les moyens élastiques de préhension 20, bien que, dans la majorité des cas, comme notamment dans le mode de réalisation préférentiel défini ci-après, la masse de ces moyens élastiques 20 est négligeable par rapport à la masse des moyens 10-30) est déterminée de façon que la projection orthogonale Pe du centre de gravité 60 de cet ensemble 10-30-20 se situe dans le polygone de sustentation.

Les moyens élastiques de préhension 20 peuvent être constitués de différentes façons. Cependant, très préférentiellement, ils sont constitués d'une capote en un matériau élastique.

Selon un premier mode de réalisation, comme illustré sur la figure 1, cette capote présente, au moins à l'état de repos, la forme d'un cône creux dont la grande base constitue l'ouverture 23.

Selon un autre mode de réalisation (non illustré) cette capote peut présenter, à l'état de repos, la forme d'un cylindre dont le diamètre est sensiblement égal à la section du premier orifice 15.

Selon une réalisation préférentielle du dispositif, comme celle qui est illustrée sur la figure 1, la percée traversante 11 présente deux parties consécutives 17, 18. Une première partie 17, celle qui borde le second orifice 15, est cylindrique de révolution pour favoriser le centrage la trajectoire du fruit sur l'axe central longitudinal (comme explicité ci-après). La seconde partie 18 présente une forme tronconique dont la petite base est confondue avec la section transversale de la première partie cylindrique de révolution.

De préférence, pour des raisons d'esthétique et de facilité de réalisation, la forme hors-tout de la seconde face 32 de l'embase 30 est sensiblement identique à celle de la seconde extrémité 14 du manchon 10. De plus, notamment pour faciliter la récupération des fruits débarrassés de leur coque, au moins la portion centrale de la seconde face 32 de l'embase 30, sinon toute cette seconde face, est de forme concave ConC.

De façon très préférentielle, la seconde position extrême P2 du manchon 10 par rapport à l'embase 30 est définie par des moyens de butée qui sont référencés 100 dans le mode de réalisation illustré sur la figure 1.

Ces moyens de butée peuvent être réalisés de nombreuses façons. Par exemple, comme illustré, ils sont constitués par une partie en saillie de l'embase 30 (la réalisation d'une partie en saillie sur le manchon est aussi possible). Mais ils peuvent être constitués par d'autres moyens, par exemple par un lien solide et de préférence souple qui relie deux points, différents de l'axe de rotation, respectivement du manchon et de l'embase. Ces moyens de butée 100 permettent de définir la valeur maximale de l'angle limite Anl mentionné ci-avant, pour obtenir notamment la fonction définie ci-dessus selon laquelle, quelle que soit la position du manchon entre ses deux positions extrêmes P1, P2, l'axe central longitudinal 12 passe toujours par la seconde face 32 de l'embase 30.

Selon un mode de réalisation possible, comme celui illustré sur la figure 1 à titre d'exemple, les moyens 22 pour coupler les moyens élastiques de préhension 20, quand ils sont constitués d'une capote en matériau élastique, avec la première extrémité 13 du manchon 10, sont constitués par un rebord saillant latéral 25 de cette première extrémité de manchon, sur lequel le bord de l'ouverture 23 de la capote 20 vient se clipser par déformation élastique en l'entourant.

Le manchon 10 et l'embase 30 peuvent être réalisés en tout matériau solide, en bois par tournage, en plastique par moulage, etc., et la capote dans une peau en un matériau élastique comme du caoutchouc ou analogue.

Les figures 2 à 4 représentent, en partie, un mode de réalisation très préférentiel et avantageux des moyens 40 pour monter le manchon 10 en rotation par rapport à l'embase 30 autour de l'axe de rotation 41 sensiblement perpendiculaire à l'axe central longitudinal 12.

Ces moyens comportent une patte 70, des moyens pour solidariser la patte 70 avec l'un 10, dit «premier élément », des deux éléments de l'ensemble «manchon-embase » 10-30, de façon qu'une portion 71 de cette patte 70 soit en saillie sur ce premier élément, et une cavité ouverte 72 réalisée dans l'autre élément 30, dit « second élément » de l'ensemble « manchon-embase ».

La cavité comporte une ouverture 73 ayant une section sensiblement complémentaire de la section transversale de la portion de patte 71 de façon que cette portion de patte soit apte à être enfoncée dans la cavité 72 en passant par l'ouverture 73.

Selon cette réalisation, l'ouverture 73, la patte 70 et la partie de la portion de patte 71 qui se trouve au niveau de cette ouverture permettent d'obtenir l'axe de rotation 41 (figures 1 et 2) mentionné ci-avant.

En effet, la paroi de l'ouverture 73 constitue un palier sur lequel repose la patte 70 qui peut ainsi pivoter par rapport à l'embase 30 autour d'un axe de pivotement qui est dans le plan de cette ouverture 73, guidée dans ce mouvement de pivotement par la portion de patte 71 plongeant dans la cavité 72. Comme cette ouverture est de forme oblongue selon une direction qui est sensiblement perpendiculaire à l'axe central longitudinal 12, cet axe de pivotement de la patte 70 et de sa portion 71, constitue de ce fait l'axe 41 défini ci-avant.

La cavité 72 est en outre conformée pour présenter deux faces opposées 74, 75 définissant une portion de dièdre limité par une droite parallèle à l'axe de rotation 41, l'angle de ce dièdre formé par les deux faces opposées 74, 75 ayant une valeur égale à la valeur de l'angle limite Anl défini ci-avant, la petite base de ce dièdre étant formée par l'ouverture 73.

Il est à noter que, dans le mode de réalisation selon les figures 2 à 4, la butée 100 est constituée par l'une 75 des deux faces opposées de la cavité. Cette face a la même fonction que la butée 100 illustrée sur la figure 1, mais présente un avantage par rapport à celle de la figure 1, à savoir une grande fiabilité temporelle que n'a pas celle de la figure 1 qui peut se casser facilement.

Quant à l'autre face 74 de la cavité 72, elle définit la première position P1 du manchon 10 par rapport à l'embase 30 quand les deux faces 14 et 32 définies ci-avant sont confondues, figure 1 en traits pleins et figure 4.

Selon une caractéristique très avantageuse de l'invention, le dispositif comporte en outre des moyens pour maintenir l'extrémité libre de la portion de patte 71 dans la cavité 72 sans l'empêcher de pivoter dans celle-ci entre ses deux positions définies par les deux faces opposées 74, 75.

Selon un mode de réalisation très préférentiel, ces moyens pour maintenir l'extrémité libre de la portion de patte dans la cavité sont constitués par le fait que la largeur de la patte est sensiblement égale à la longueur de l'ouverture 73, et par le fait que la portion de patte 71 comporte en outre au moins un ergot 76, 77 (de préférence deux en opposition de chaque côté de la portion de patte 71, figure 2) en forme sensiblement d'ardillon, solidaire en saillie de la tranche de cette portion de patte 71, et une rainure 78, 79 en forme d'arc de cercle réalisée dans la paroi de la cavité 72 de façon que l'ergot 76, 77 soit apte à la parcourir quand la portion de patte 71 pivote dans la cavité au niveau de l'ouverture 73.

Très avantageusement, peuvent être prévus des moyens pour guider l'introduction de la portion de patte 71 dans la cavité 72, comportant par exemple au moins une découpe 80 réalisée dans la portion de patte 71 selon un plan sensiblement perpendiculaire à l'axe de rotation 41, et une plaque 81 montée solidaire du second élément 30 dans la cavité 72, cette plaque ayant une section transversale sensiblement complémentaire de celle de la découpe 80 pour que cette découpe surmonte la plaque 81 quand la portion de patte 71 est enfoncée dans la cavité 72. Le dispositif décrit ci-dessus fonctionne de la façon suivante :
Si un utilisateur veut par exemple casser la coque d'une noisette Fc, il positionne tout d'abord le dispositif dans sa configuration illustrée en traits interrompus, de façon que le manchon 10 soit dans sa seconde position extrême P2. Du fait de la structure du dispositif comme définie ci-avant, le manchon 10 est apte à se maintenir de façon constante dans cette position, si l'embase 30 est sur un plan horizontal, ce qui est le cas le plus probable.

L'utilisateur pose alors la noisette dans la partie concave ConC de la face 32 de l'embase 30, puis positionne le manchon 10 pour qu'il prenne sa première position extrême P1 et retourne, par exemple manuellement, le dispositif de façon que l'embase soit à un niveau supérieur à celui de la capote 20. De ce fait, sous l'effet de la force de gravitation, la noisette Fc tombe dans le fond de la capote.

Par exemple avec deux doigts D1, D2 d'une main, i.e. le pouce et l'index, il pince la noisette avec, interposée, une portion de la paroi de la capote 20. En maintenant le manchon et l'embase avec l'autre main, il retourne le dispositif et exerce une force de traction Ft sur la capote par rapport au manchon 10 (traits interrompus), pour déformer élastiquement par allongement Pal la capote 20, tout en maintenant la noisette pincée. Quand la capote est bien bandée, il peut la lâcher, et avec elle la noisette. Sous l'action de la force élastique de rétractation de la capote qui reprend sa forme originelle, la noisette Fc est violemment projetée sur la face 32 de l'embase 30, sur laquelle se brise sa coque. L'utilisateur peut, en ramenant le manchon 10 dans sa position P2 et en passant sa main dans l'espace créé entre le bord 120 du manchon et le bord 122 de l'embase, prélever le fruit de la noisette libéré de la coque. Pour éliminer les débris de la coque, il lui suffit de pencher le dispositif afin de les faire tomber, par exemple dans sa main ou dans une coupelle.

La structure du dispositif selon l'invention est particulièrement avantageuse notamment sur le plan de la sécurité. En effet, parce que, quelle que soit la position du manchon par rapport à l'embase, l'axe central longitudinal 12 coupe ou intercepte toujours la face 32 de l'embase, la noisette va toujours frapper cette face 32. Il ne lui est pas possible d'être projetée dans le milieu environnant à la manière d'un projectile susceptible de créer un accident comme blesser une personne.

## Revendications

1. Dispositif pour casser les coques des fruits à coque (Fc), comportant :
• un manchon (10) comprenant une percée traversante (11) selon un axe central longitudinal (12), ladite percée traversante débouchant sur les première et seconde extrémités (13, 14) du manchon respectivement par un premier orifice (15) et un second orifice (16),
• des moyens élastiques de préhension (20) aptes à exercer une force selon une direction préférentielle,
• des moyens (22) pour coupler ces dits moyens élastiques de préhension (20) avec la première extrémité (13) du manchon de façon que ladite direction préférentielle soit sensiblement confondue avec ledit axe central longitudinal (12), et
• une embase (30) comportant deux faces opposées, une première face (31) apte à reposer sur une surface de référence (Sr) et une seconde face (32) sur laquelle est apte à reposer la seconde extrémité (14) du manchon (10), ladite seconde face (32) ayant une forme hors-tout sur laquelle peut reposer la seconde extrémité (14) du manchon (10),
**caractérisé par le fait qu'**il comporte en outre des moyens (40) pour monter ledit manchon (10) en rotation par rapport à ladite embase (30) autour d'un axe de rotation (41) sensiblement perpendiculaire au dit axe central longitudinal (12), de façon que ledit manchon (10) soit apte à prendre toutes positions entre une première position extrême (P1) dans laquelle le plan de la seconde extrémité (14) du manchon repose sur la seconde face (32) de ladite embase (30), et une seconde position extrême (P2) dans laquelle le plan de cette seconde extrémité (14) du manchon fait, avec le plan de la seconde face (32) de ladite embase (30), un angle non nul (An).

2. Dispositif selon la revendication 1, **caractérisé par le fait que** les moyens (40) pour monter ledit manchon (10) en rotation par rapport à ladite embase (30) autour dudit axe de rotation (41) sont agencés de façon que, lorsque le manchon (10) est dans sa seconde position extrême (P2), le plan de sa seconde extrémité (14) fait, avec le plan de la seconde face (32) de l'embase (30), un angle dit « angle limite » (Anl) d'une valeur telle que, dans toutes les positions du manchon entre ses deux positions extrêmes (P1, P2), l'axe central longitudinal (12) coupe constamment la seconde face (32) de l'embase.

3. Dispositif selon l'une des revendications 1 et 2, **caractérisé par le fait que**, lorsque ledit dispositif est apte à être utiliser dans un milieu où règne une force de gravitation, la surface de référence (Sr) étant alors une surface horizontale et la première face (31) de ladite embase (30) constituant le polygone de sustentation (PolyS) du dit dispositif, la masse du manchon (10) est déterminée de façon que la projection orthogonale (Pm) de son centre de gravité (50) sur ladite surface de référence (Sr) quand le manchon est dans sa seconde position extrême (P2), coupe cette surface de référence (Sr) en dehors du dit polygone de sustentation (PolyS).

4. Dispositif selon la revendication 3, **caractérisé par le fait que** la masse totale de l'ensemble « manchon-embase » (10-30) est déterminée de façon que, quelle que soit la position, par rapport à l'embase (30), du manchon (10) entre ses deux positions extrêmes (P1, P2), la projection orthogonale (Pe) du centre de gravité (60) de cet ensemble (10-30) se situe dans ledit polygone de sustentation.

5. Dispositif selon l'une des revendications précédentes, **caractérisé par le fait que** ladite seconde position extrême (P2) du manchon (10) par rapport à l'embase (30) est définie par des moyens de butée (100).

6. Dispositif selon l'une des revendications précédentes quand elle dépend de la revendication 2, **caractérisé par le fait que** les moyens (40) pour monter ledit manchon (10) en rotation par rapport à ladite embase (30) autour dudit axe de rotation (41) sensiblement perpendiculaire au dit axe central longitudinal (12) comportent :
• une patte (70),
• des moyens pour solidariser la patte (70) avec l'un (10), dit « premier élément », des deux éléments de l'ensemble « manchon-embase » (10-30), de façon qu'une portion (71) de cette patte (70) soit en saillie sur ce dit premier élément,
• une cavité ouverte (72) réalisée dans l'autre élément (30), dit « second élément », de l'ensemble « manchon-embase », ladite cavité comportant une ouverture (73) ayant une section sensiblement complémentaire de la section transversale de ladite portion de patte (71) de façon que cette dite portion de patte soit apte à être enfoncée dans la cavité (72) en passant par ladite ouverture (73), la cavité étant en outre conformée pour présenter deux faces opposées (74, 75) définissant une portion de dièdre limitée par une droite parallèle audit axe de rotation (41), l'angle de ce dièdre formé par ces deux faces opposées (74, 75) ayant une valeur égale à ladite valeur dudit angle limite (Anl), la petite base de ce dièdre étant formée par ladite ouverture (73).

7. Dispositif selon la revendication 6, **caractérisé par le fait qu'**il comporte des moyens pour maintenir l'extrémité libre de ladite portion de patte (71) dans ladite cavité (72) sans l'empêcher de pivoter dans celle-ci entre ses deux positions définies par les deux dites faces opposées (74, 75).

8. Dispositif selon la revendication 7, **caractérisé par le fait que** les moyens pour maintenir l'extrémité libre de la portion de patte (71) dans la cavité sont constitués **par le fait que** la largeur de ladite patte est sensiblement égale à la longueur de ladite ouverture (73), et **par le fait que** ladite portion de patte (71) comporte :
• au moins un ergot (76, 77) en forme sensiblement d'ardillon, solidaire en saillie de la tranche de ladite portion de patte (71), et que
ladite cavité comporte
• une rainure (78, 79) en forme d'arc de cercle réalisée dans sa paroi (72) de façon que ledit ergot (76, 77) soit apte à la parcourir quand ladite portion de patte (71) pivote dans ladite cavité au niveau de ladite ouverture (73) entre les deux dites faces opposées (74, 75).

9. Dispositif selon l'une des revendications 6 à 8, **caractérisé par le fait qu'**il comporte des moyens pour guider l'introduction de ladite portion de patte (71) dans ladite cavité (72).

10. Dispositif selon la revendication 9, **caractérisé par le fait que** les moyens pour guider l'introduction de la portion de patte (71) dans la cavité (72) comportent au moins :
• une découpe (80) réalisée dans ladite portion de patte (71) selon un plan sensiblement perpendiculaire à l'axe de rotation (41), et
• une plaque (81) montée solidaire du second élément (30) dans ladite cavité (72), la plaque ayant une section transversale sensiblement complémentaire de celle de ladite découpe (80), pour que ladite découpe (80) surmonte ladite plaque (81) quand la portion de patte (71) est enfoncée dans ladite cavité (72).

11. Dispositif selon l'une des revendications précédentes, **caractérisé par le fait que** les moyens élastiques de préhension (20) sont constitués d'une capote en un matériau élastique qui, à l'état de repos, présente la forme d'un cylindre dont le diamètre est sensiblement égal à la section du premier orifice (15).
